# EUROPEAN PATENT SPECIFICATION

(11) **EP 3 522 730 B1**
(45) Date of publication and mention of the grant of the patent: **06.12.2023**
(21) Application number: 17784905.6
(22) Date of filing: 04.10.2017
(51) Int. Cl.: A22C 21/00

(54) **POULTRY SHACKLE OR PRODUCT CARRIER WITH TENDON TRAP FOR SUSPENDING POULTRY OR PARTS THEREOF**
GEFLÜGELBÜGEL ODER PRODUKTTRÄGER MIT SEHNENFALLE ZUM AUFHÄNGEN VON GEFLÜGEL ODER TEILEN DAVON
CHAÎNE POUR VOLAILLES OU SUPPORT DE PRODUIT AYANT UN PIÈGE À TENDON POUR SUSPENDRE DES VOLAILLES OU DES PARTIES DE CELLES-CI

(30) Priority: 06.10.2016 DK PA201600600
(43) Date of publication of application: 14.08.2019
(73) Proprietor: Teknologisk Institut, 2630 Taastrup (DK)
(72) Inventor: THRANE, Uffe, 2630 Taastrup (DK)
(74) Representative: AWA Denmark A/S
(86) International application number: PCT/EP2017/075100
(87) International publication number: WO 2018/065430

(56) References cited:
- WO-A2-93/13671
- US-A- 2 448 421
- US-A1- 2016 029 650

## Description

The invention relates to product carriers or shackles with tendon traps for suspending poultry or parts thereof. The shackles can be used when slaughtering poultry at abattoirs and increases the number of poultry parts such as individual legs which hang in the correct position during processes e.g. during deboning.

### Background of invention

Shackles or product carriers are used for suspending poultry during the processing of the carcasses. Many types of shackles are performing very well as long as two legs of a unity are connected to the shackle i.e. as long as a shackle carries an entire carcass or a two-legged carcass part which is hanging with both legs in the shackle. Problems may arise when the carcass is split into two parts and each part is hanging in one leg in the shackle.

Product carriers such as those described in WO 93/13671 'Device and plant for conveying slaughtered animals, in particular birds' has a plane-formed bearing element and a shut-off device which can be moved to switch the product carrier between an open and closed position of two recesses each for holding one leg of a poultry making it possible to carry the poultry in a hanging position. Such product carriers cannot hold the single legs in a pre-determined position when the carcass is split into two parts and each part is hanging in only one leg.

The processing of poultry where the correct position of the carcass-part hanging in only one leg is important is e.g.:
- Pre-cutting of skin before removing the skin
- Making a longitudinal cut at the rear side of the thigh or along the whole leg when deboning both thigh and drumstick
- Cutting tendons from the knee joint before deboning the thigh
- Separation of deboned thigh bone from the drumstick
- Cutting Achilles tendon before deboning the drumstick
- Separating thigh and drumstick when the two parts or one of the two parts are not deboned

Insufficient positioning of products such as one-leg carcass parts results in e.g. meat left behind on the bones as it cannot be automatic pulled off due to e.g. deficient cut tendons and/or broken bones because the products are not caught correctly by the machines at the deboning line at abattoirs.

By a correct positioning of one-leg carcass parts especially of poultry it is possible to reduce the amount of meat which is discarded or sold at a lower price due to downgrading of the meat e.g. when being impossible to remove from bones. Abattoirs may thus improve the income if it is possible to obtain a correct position of one-leg carcass parts during handling and/or deboning of such products, as the amount of harvested meat can be increased.

### Summary of invention

The invention is related to a product carrier or shackle for carrying suspended poultry or split parts of poultry in both legs or in one leg, respectively, where the product carrier comprises a plane-formed bearing element with at least one shut-off device and at least one recess for holding a poultry leg and the recess may comprise at least one tendon trap and/or the recess can be more circular than oval-shaped when observed along an axis corresponding substantially to the axis of a poultry drumstick bone when being present in the product carrier.

The product carrier is designed to improve the positioning of especially one-legged carcass parts. This can be obtained by producing a tendon trap in the recess e.g. in the long part of the bearing element. The tendon trap and its dimensions e.g. together with other dimensions of the recess improve positioning of one-legged carcass parts by positioning the Achilles tendon in the tendon trap. Hereby improved deboning can be obtained corresponding to decreased meat loss at the deboning line. Also anatomical separation of non-deboned thigh and drumstick will be more accurate using shackles with a tendon trap resulting in better product value because of more 'A grade' cut parts i.e. high-value products.

The invention also relates to use of the product carrier with the tendon trap for carrying a carcass of a slaughtered animals or part(s) of such carcass, e.g. one two-legged carcass, one two-legged carcass part, two one-legged carcass part or one one-legged carcass part. Preferably the use is at abattoirs such as poultry abattoirs.

### Brief description of figures

Fig. 1 illustrates a shackle from WO 93/13671.
Fig. 2 illustrates the contour of a recess area of a prior art shackle.
Fig. 3 illustrates the contour of a recess area of a shackle according to the invention described herein.
Fig. 4 illustrates a comparison of the contour of a recess of a prior art shackle and of a recess of a shackle according to the invention described herein.
Fig. 5 illustrates a comparison of the contour of a cut-out section of the recess of a prior art shackle and of a tendon trap of a shackle according to the invention described herein.
Fig. 6 illustrates comparison of a recess from a prior art shackle and from the shackle according to the invention described herein.
Fig. 7 illustrates tendon trap angle A and angle B.
Fig. 8 illustrates length and width of recesses.

### Detailed description of the invention

An aspect of the invention relates to a product carrier especially for carrying suspended poultry or split parts of poultry in both legs or in one leg, respectively, the product carrier may comprise a plane-formed bearing element with at least one shut-off device and at least one recess for holding a poultry leg and the recess may comprise at least one tendon trap and/or the recess is more circular than oval-shaped when observed along an axis corresponding substantially to the axis of a poultry drumstick bone when being present in the product carrier.

Though the product carrier is described especially for carrying poultry or poultry parts, the product carrier may also be used for carrying other types of animal carcasses or parts hereof. The carcasses or parts hereof may be suspended with one or two legs in a product carrier or with one or two bones in a product carrier. The leg(s) or bone(s) fastened to the product carrier may comprise any of skin, meat, fat, membranes and/or tendons, or some or all of these may be removed before suspended by a product carrier. Preferably a leg or bone suspended in a product carrier comprises at least one tendon located along the leg or bone.

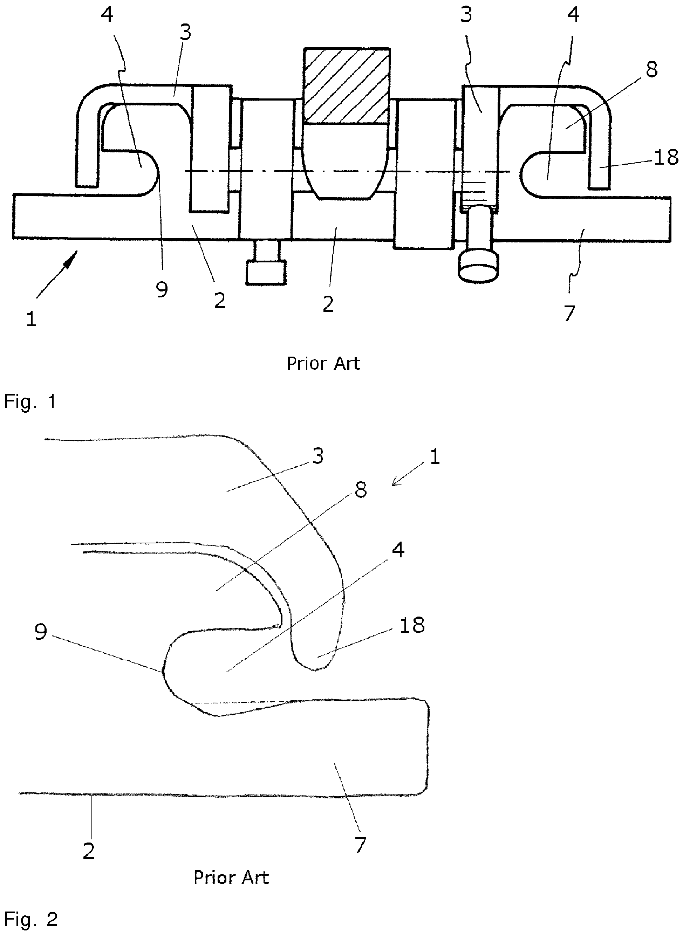

The person skilled in the art knows how product carriers/shackles are designed and are used at abattoirs, thus only the design of the recess area is described herein. The product carrier described herein may especially be used for cooled poultry, however, the product carrier may also be used in the processes before cooling the poultry. A prior art poultry shackle is illustrated in Fig. 1, which shackle does not have an incision along the recess edge. Another prior art poultry shackle is illustrated in Fig. 2 illustrating a small incision along the recess edge of the long part of the bearing element. This incision is not a tendon trap as it is not designed to avoid rotation of animal legs or animal bones suspended in the product carrier and especially when the animal parts are hanging with only one leg or bone in a product carrier.

A shackle with a tendon trap as described herein improves the positioning of products such as one-leg carcass parts and hereby it is possible e.g. to increase the deboning process leaving less meat on the bone as well as improving the processes described herein above e.g. in the Background section when the correct positioning of one legged carcass parts is obtained. Though the processes are described in respect of poultry, corresponding processes may be performed with carcasses or carcass parts of other animals and with different types of bones from other types of animals. Preferably the bones located in a product carrier described herein are tubular bones.

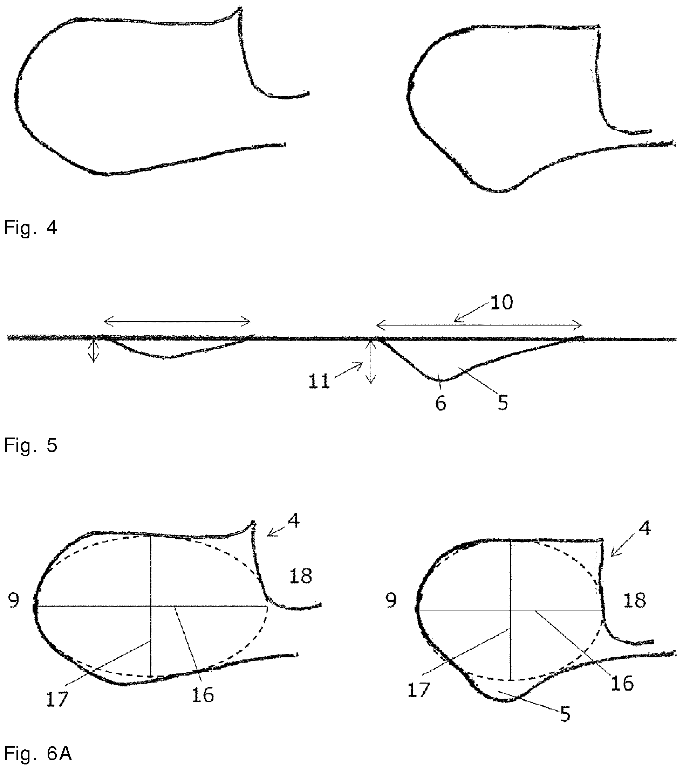

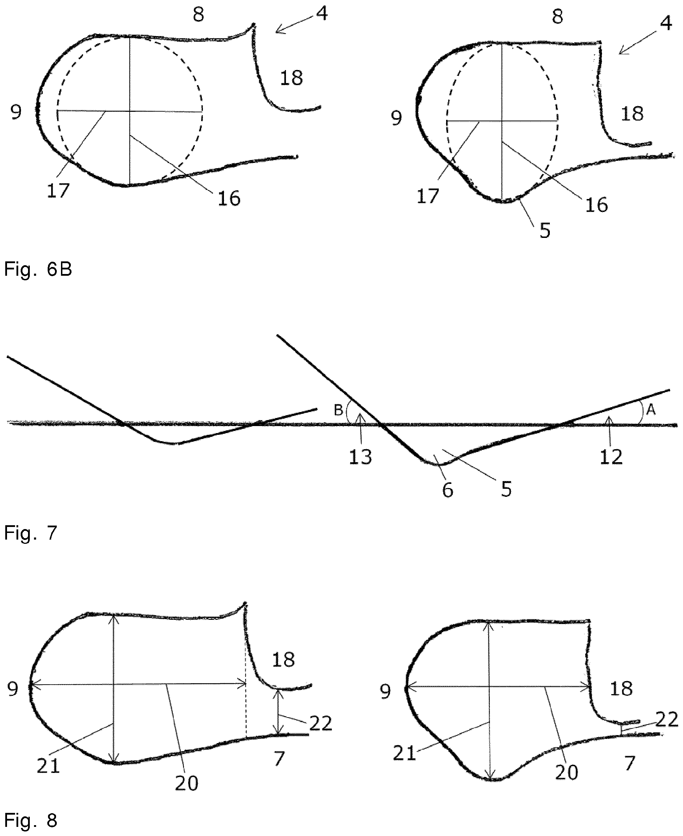

With the description that the recess is more circular than oval-shaped means that if an ellipse is drawn in the recess as illustrated in Fig. 6A, the relation between the ellipse major diameter and the ellipse minor diameter is preferably less than 1.5, such as less than 1.4, e.g. less than 1.3, such as less than 1.2, e.g. less than 1.1. Preferably the relation between the ellipse major diameter and the ellipse minor diameter is between 1.1 and 1.3. A recess which is more circular than oval-shaped can also be described in relation to Fig. 8 as the relation between the ellipse major diameter and the ellipse minor diameter is preferably the ellipse major diameter measured along the length of the recess and the ellipse minor diameter is preferably measured along the width of the recess, and the relation between this ellipse major diameter and this ellipse minor diameter is preferably less than 1.5. Fig. 8 illustrates the length and width of the recess.

When comparing the product carrier or shackles of the present invention to prior art shackles, the recess length is preferably shorter and the recess width may be increased in the shackles of the present invention. Such comparing is preferably performed between prior art shackles and the shackles of the present invention for transport of poultry carcasses of similar size and/or of similar weight.

The plane-formed bearing element may comprise a short part and a long part which is located on each side of the recess and the tendon trap may be a slot made in the short part of the recess or in the long part of the recess. Preferably the tendon trap is located in the long part of the plane-formed bearing element and within the area defined by the recess and the shut-off device when being in a closed position. The tendon trap may also be located in the short part of the plane-formed bearing element. Preferably a tendon trap is located in both the right and left recesses of the plane-formed bearing element, and more preferably both of the tendon traps of a single bearing element are located in the short or long part, most preferably in the long part of the bearing element.

The slot has a depth, denoted a tendon trap depth, which may be at least 2.5 mm, such as at least 3 mm, e.g. at least 3.5 mm, such as at least 4 mm, e.g. at least 4.5 mm, such as at least 5 mm, e.g. at least 6 mm, such as at least 7 mm, e.g. at least 8 mm, such as at least 9 mm, e.g. at least 10 mm, when measured from a line parallel to a line of an inner side of the short part or of the long part along the recess depending on where the tendon trap is located. The depth of the tendon trap is illustrated in Fig. 5.

The tendon trap has a tendon trap length which may be of at least 12 mm, such as at least 13 mm, e.g. at least 14 mm, such as at least 15 mm, e.g. at least 16 mm, such as at least 17 mm, e.g. at least 18 mm, e.g. at least 19 mm, such as at least 20 mm, e.g. at least 21 mm, such as at least 22 mm, e.g. at least 23 mm, such as at least 24 mm, e.g. at least 25 mm, such as at least 26 mm, e.g. at least 27 mm such as at least 28 mm, e.g. at least 29 mm, such as at least 30 mm, e.g. at least 31 mm. The tendon trap length is illustrated in Fig. 5 and is measured as the length of the tendon trap along a line parallel to a line of an inner side of the short part of the bearing element or of the long part of the bearing element along the recess depending on where the tendon trap is located. The tendon trap length may be e.g. between 19 mm and 27 mm for broilers of about 1.8 kg to 2.5 kg.

The tendon trap has a tendon trap angle A and/or a tendon trap angle B and the tendon trap angle A may be at least 17 degree, such as at least 18 degree, e.g. at least 19 degree, such as at least 20 degree, at least 21 degree, such as at least 22 degree and/or the tendon trap angle B may be at least 30 degree, such as at least 31 degree, e.g. at least 32 degree, such as at least 33 degree, e.g. at least 34 degree, such as at least 35 degree, e.g. at least 36 degree, such as at least 37 degree, e.g. at least 38 degree, such as at least 39 degree, e.g. at least 40 degree, such as at least 41 degree. Tendon trap angle A and tendon trap angle B are illustrated in Fig. 7 and is each defined as the angle between a line extending the outline of the tendon trap and a line representing the inner side of the bearing element next to the tendon trap. Tendon trap angle A is located in the area close to the tip of the shut-off device when the product carrier is in a closed position. Tendon trap angle B is located in the area close to the base of the recess. In a preferred embodiment tendon trap angle A is 19-22 degree and tendon trap angle B is 35-43 degree.

Preferably the tendon trap has an outline corresponding to the natural shape of the animal part which is to be located in the product carrier i.e. e.g. the hock with the Achilles tendon. However the tendon trap may be a little larger than the natural shape of the animal part as biological variety exists among the animals to be handled by the product carrier. The tendon trap depth seem to be the most important feature of the tendon trap depth and tendon trap length to secure correct positioning of the animal parts in the product carrier and especially for correct positioning of carcass parts hanging in only one recess of a product carrier.

Product carriers to be used at abattoirs may be of different size, such that the selected product carriers are specific for the size of the carcasses or carcass parts to be carried. The product carrier as described herein is preferably for poultries i.e. broilers and the recess may have a length of less than 30 mm, such as less than 29 mm, e.g. less than 28 mm, such as less than 27 mm, e.g. less than 26 mm, such as less than 25 mm, e.g. less than 24 mm, such as less than 23 mm, e.g. less than 22 mm, such as between 18-23 mm, e.g. between 20-22 mm, such as between 23 mm and 28 mm, e.g. between 25 mm and 31 mm. Length of recess of e.g. 20-22 mm may be for poultry of about 2-2.5 kg, whereas length of recess of e.g. about 28 mm may be for poultry of about 3 kg. Length of recess is measured when the product carrier is in a closed position and measured from the tip of the shut-off device to the base of the recess. Length of recess corresponds to the ellipse major diameter as illustrated in Fig. 6A. The location of the recess length is also indicated in Fig. 8.

When the product carrier is for broilers the recess may have a width of at least 16 mm, such as at least 17 mm, e.g. at least 18 mm, such as at least 19 mm, e.g. at least 20 mm, such as at least 21 mm, e.g. at least 22 mm, such as at least 23 mm, e.g. at least 24 mm, such as at least 25 mm, e.g. at least 26 mm, such as between 16.5 and 20 mm, e.g. between 17 and 19 mm, such as between 20 mm and 26 mm. Width of recess of about 17-19 mm may be for poultry of about 2-2.5 kg, whereas width of recess of about 25 mm may by for poultry of about 3 kg. The recess width is measured as the longest distance across the recess between the long and short part of the bearing element. Width of recess corresponds to the ellipse major diameter as illustrated in Fig. 6B. The location of the recess width is indicated in Fig. 8

When the product carrier is in a closed position the distance between the tip of the shut-off device and the long part of the bearing element may be less than 5 mm, such as less than 4.5 mm, e.g. less than 4 mm, such as less than 3.5 mm, e.g. less than 3 mm, such as less than 2.5 mm, e.g. less than 2 mm, such as between 1.5 and 5 mm, e.g. between 2 and 4 mm, such as between 2 and 3 mm. A small distance improves the number of one-legged carcass parts being positioned correct in the product carrier. The location of the distance between the tip of the shut-off device and the long part of the bearing element is indicated in Fig. 8.

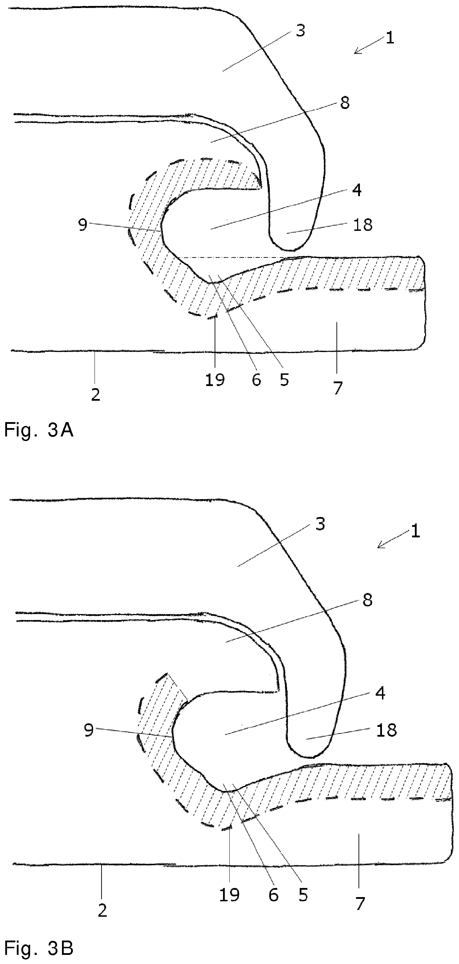

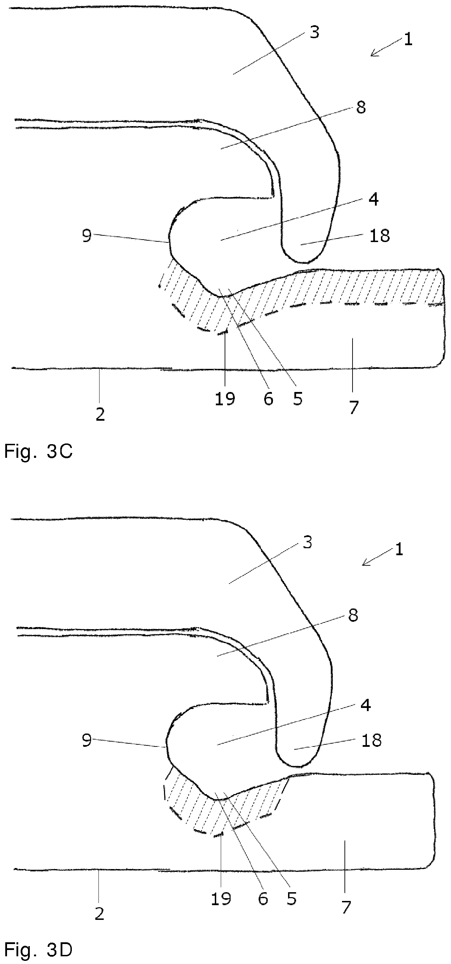

The material constituting the bearing element may along the recess of the product carrier be inclined. Fig. 3 illustrates some examples of what part of the bearing element may be inclined along the recess. Fig. 3 illustrates the product carrier observed from above when a carcass or carcass part is under transport. The incline is hereby outwardly from the recess in an upward direction. At least a part of the bearing element along the recess may be inclined and preferably the bearing element along the recess is inclined at least along the tendon trap. More preferably the recess is inclined at least along the tendon trap and the long part of the bearing element.

An aspect of the invention relates to a method of producing a product carrier as described herein. In the production of a product carrier as described herein the tendon trap in one or both recesses of a product carrier can be produced when the product carrier is formed e.g. by cast moulding and/or the tendon trap can be produced by removing part of the product carrier along the recess after the product carrier has been formed, removal of material to produce a tendon trap may be performed e.g. by grinding. The produced product carrier may comprise any of the characteristics described herein.

Another aspect of the invention relates to use of the product carrier as described herein for carrying a carcass of a slaughtered animals or part(s) of such carcass, e.g. one two-legged carcass, one two-legged carcass part, two one-legged carcass part or one one-legged carcass part.

The use of the product carrier may be for carrying carcasses or part thereof of poultry and preferably the size of the tendon traps of the product carrier is produced in respect of the size of the poultry to be carried. The poultry may be e.g. broilers with a slaughter weight of less than 5 kg, e.g. less than 3.5 kg, such as of a weight of between 1.5 kg and 3 kg, e.g. between 1.8 kg. and 2.5 kg. The poultry may also be turkeys with a slaughter weight of less than 30 kg, e.g. of 3-10 kg, such as of 10-20 kg, e.g. of 20-30 kg.

### Detailed description of the figures

Fig. 1 illustrates a prior art shackle from WO 93/13671. The product carrier (1) comprises a plane-formed bearing element (2) with a shut-off device (3). In the plane-formed bearing element (2) a recess (4) is produced making a long part (7) of the bearing element along one side of the recess and a short part (8) of the bearing element along the other side of the recess. The recess (4) is in overall a rectangle which is rounded at the base (9) of the recess (4). The product carrier (1) is shown with the shut-off device (3) in a closed position where the tip (18) of the shut-off device (3) blocks entrance into and exit from the recess (4). The product carrier (1) is seen from above when the carrier is in use.

Fig. 2 illustrates the contour of a recess area of a prior art shackle. The product carrier (1) comprises a plane-formed bearing element (2) with a shut-off device (3). In the plane-formed bearing element (2) a recess (4) is produced making a long part (7) of the bearing element along the recess and a short part (8) of the bearing element along the recess. The recess (4) is in overall a rectangle which is rounded at the base (9) of the recess (4) and has a small incision in the recess along the long part (7) of the bearing element (2). The product carrier (1) is shown with the shut-off device (3) in a closed position where the tip (18) of the shut-off device (3) blocks entrance into and exit from the recess (4). The hatched line (alternating lines and dots) indicate the through-going line of Fig. 5. This line is not part of the shackle. The contour of a recess area is seen from above when the carrier is in use.

With these prior art shackles insufficient positioning of one-legged carcass parts have been observed which results in e.g. meat left behind on the bones as it cannot be automatic pulled off due to deficient cut tendons. Also broken bones have been observed as the carcass parts are not caught correctly by the machines at the deboning line.

Fig. 3 illustrates the contour of a recess area of a shackle according to the invention described herein. The product carrier (1) comprises a plane-formed bearing element (2) with a shut-off device (3) in a closed position with the tip (18) of the shut-off device (3) being close to the plane-formed bearing element (2). In the plane-formed bearing element (2) a recess (4) is produced making a long part (7) of the bearing element along the recess and a short part (8) of the bearing element along the recess. The recess (4) is in overall circular or weakly elliptical and has a slot (6) functioning as a tendon trap (5) in the recess along the long part (7) of the bearing element. Illustrated is also a border (19) between inclined and non-inclined area of the plane-formed bearing element (2). The plane-formed bearing element (2) is inclined from the border (19) and towards the recess (4) as illustrated by the area hatched with dotted lines. The hatched line of alternating lines and dots in Fig. 3A indicates the through-going line of Fig. 5. This line is not part of the shackle. Fig. 3A illustrates a recess area with an inclined area along the long part (7) of the bearing element, along the tendon trap (5), along the base (9) of the recess and along the short part (8) of the bearing element. Fig 3B illustrates a recess area with an inclined area along the long part (7) of the bearing element, along the tendon trap (5) and along the base (9) of the recess. Fig. 3C illustrates a recess area with an inclined area along the long part (7) of the bearing element and along the tendon trap (5). Fig. 3D illustrates a recess area with an inclined area along the tendon trap (5).

Fig. 4 illustrates a comparison of the contour of a recess of a prior art shackle (left side) and of a recess of a shackle according to the invention described herein (right side). The recesses are seen from the same perspective as with the shackles of Fig. 1 to 3.

Fig. 5 illustrates a comparison of the contour of a cut-out section of a prior art shackle (left side) and of a tendon trap (5) of a shackle according to the invention described herein (right side). Illustrated is also a slot (6) functioning as the tendon trap (5). The figure illustrates the tendon trap length (10) and tendon trap depth (11). The straight line across the entire illustration illustrates the edge of the long part (7) of the bearing element of the shackles from where the cut-out sections belong and where this line is extended over the incision or the tendon trap (5). The location of this line is also indicated in Fig. 2 and 3A.

Fig. 6 illustrates comparison of a recess from a prior art shackle (left side in both Fig. 6A and 6B) and from the shackle according to the invention described herein (right side in both Fig. 6A and 6B). Fig. 6A illustrates an ellipse reaching the base (9) of the recess (4) and the tip (18) of the shut-off device of a prior art shackle (left side) and of the shackle according to the invention described herein (right side). Fig. 6B illustrates an ellipse reaching the bottom part of the incision or tendon trap (5) and the recess (4) edge of the short part (8) of the bearing element of a prior art shackle (left side) and of the shackle according to the invention described herein (right side). In all illustrations the ellipse major diameter (16) and ellipse minor diameter (17) are indicated. The recesses in both illustrations are seen from the same perspective as with the shackles of Fig. 1 to 3.

Fig. 7 illustrates incision or tendon trap angle A and angle B. The illustration is based on Fig. 5 and the lines representing the outline of the incision or a slot (6) functioning as a tendon trap (5) which are below the horizontal line. The two lines of each of the incision or tendon trap (5) of the prior art shackle (left side) and of the shackle according to the invention described herein (right side) are extended above the horizontal line. Each extended line and the horizontal line make an angle to each other. The angles to the right of each drawing are incision or tendon trap angle A (12). The angles to the left of each drawing are incision or tendon trap angle B (13).

Fig. 8 illustrates length and width of recesses. Illustrated are a recess from a prior art shackle (left side) and a recess from the shackle according to the invention described herein (right side). The length (20) of the recess is illustrated measured from the base (9) of the recess and to the tip (18) of the shut-off device or in the prior-art shackle to a dashed line extending a 'vertical' line of the tip (18) of the shut-off device. The width (21) of the recess is measured from the top of the recess to the bottom of the slot or tendon trap as indicated. Illustrated is also distance (22) between the tip (18) of the shut-off device and the long part (7) of the bearing element. The recesses are seen from the same perspective as with the shackles of Fig. 1 to 3.

### List of reference signs

In the figures, identical structures, elements or parts that appear in more than one figure are generally labeled with the same numeral in all the figures in which they appear.
1. Product carrier
2. Plane-formed bearing element
3. Shut-off device
4. Recess
5. Tendon trap
6. Slot
7. Long part of bearing element along recess
8. Short part of bearing element along recess
9. Base of recess
10. Tendon trap length
11. Tendon trap depth
12. Tendon trap angle A
13. Tendon trap angle B
14. Recess length
15. Recess depth
16. Ellipse major diameter
17. Ellipse minor diameter
18. Tip of shut-off device
19. Border between inclined and non-inclined area
20. Length of recess
21. Width of recess
22. Distance between tip of shut-off device and long part of bearing element

## Claims

1. A product carrier (1) for carrying a suspended poultry, or a split part of a poultry, in both legs or in one leg, respectively, which product carrier (1) comprises:
a plane-formed bearing element (2) with at least one shut-off device (3); and
at least one recess (4) for holding a poultry leg, and said recess (4) comprises at least one tendon trap (5), **characterised in that** said recess (4) is more circular than oval-shaped, when observed along an axis corresponding substantially to the axis of the poultry drumstick bone when being present in the product carrier; and
wherein said recess (4) has a relation between the ellipse major (16) diameter and the ellipse minor (17) diameter which is less than 1.5, when the ellipse major (16) diameter is measured along the length (20) of said recess (4) and the ellipse minor (17) diameter is measured along the width (21) of said recess (4).

2. The product carrier (1) of claim 1, wherein said plane-formed bearing element (2) comprises a short part (8) and a long part (7) on each side of said recess (4), and said tendon trap (5) is a slot (6) in said short part (8) of the recess (4) and/or in said long part (7) of the recess (4).

3. The product carrier (1) according to either one of claims 1-2, wherein said slot (6) has a depth, denoted a tendon trap depth (11), of at least 2.5 mm, such as at least 3 mm, e.g. at least 3.5 mm, such as at least 4 mm, e.g. at least 4.5 mm, such as at least 5 mm, e.g. at least 6 mm, such as at least 7 mm, e.g. at least 8 mm, such as at least 9 mm, e.g. at least 10 mm, when measured from a line extending the edge of said short part (8) or of said long part (7) along said recess (4).

4. The product carrier (1) according to any one of claims 1-3, wherein said tendon trap (5) has a tendon trap length (10) of at least 12 mm, such as at least 13 mm, e.g. at least 14 mm, such as at least 15 mm, e.g. at least 16 mm, such as at least 17 mm, e.g. at least 18 mm, e.g. at least 19 mm, such as at least 20 mm, e.g. at least 21 mm, such as at least 22 mm, e.g. at least 23 mm, such as at least 24 mm, e.g. at least 25 mm, such as at least 26 mm, e.g. at least 27 mm, such as at least 28 mm, e.g. at least 29 mm, such as at least 30 mm, e.g. at least 31 mm.

5. The product carrier (1) according to any one of claims 1-4, wherein said tendon trap (5) has a tendon trap angle A (12) and/or a tendon trap angle B (13) and wherein said tendon trap angle A (12) is at least 17 degree, such as at least 18 degree, e.g. at least 19 degree, such as at least 20 degree, at least 21 degree, such as at least 22 degree and/or said tendon trap angle B (13) is at least 30 degree, such as at least 31 degree, e.g. at least 32 degree, such as at least 33 degree, e.g. at least 34 degree, such as at least 35 degree, e.g. at least 34 degree, such as at least 35 degree, e.g. at least 36 degree, such as at least 37 degree, e.g. at least 38 degree, such as at least 39 degree, e.g. at least 40 degree, such as at least 41 degree.

6. The product carrier (1) according to any one of claims 1-5, wherein when said product carrier (1) is for broilers, and said recess (4) has a length (20) of less than 30 mm, such as less than 29 mm, e.g. less than 28 mm, such as less than 27 mm, e.g. less than 26 mm, such as less than 25 mm, e.g. less than 24 mm, such as less than 23 mm, e.g. less than 22 mm, such as between 18 mm and 23 mm, e.g. between 20 mm and 22 mm, such as between 23 mm and 28 mm, e.g. between 25 mm and 31 mm.

7. The product carrier (1) according to any one of claims 1-6, wherein when said product carrier (1) is for broilers, and said recess (4) has a width (21) of at least 16 mm, such as at least 17 mm, e.g. at least 18 mm, such as at least 19 mm, e.g. at least 20 mm, such as at least 21 mm, e.g. at least 22 mm, such as at least 23 mm, e.g. at least 24 mm, such as at least 25 mm, e.g. at least 26 mm, such as between 16.5 mm and 20 mm, e.g. between 17 mm and 19 mm, such as between 20 mm and 26 mm.

8. The product carrier (1) according to any one of claims 1-7, wherein, when said product carrier (1) is in a closed position, the distance between the tip (18) of the shut-off device (3) and the long part (7) of the bearing element (2) is less than 5 mm, such as less than 4.5 mm, e.g. less than 4 mm, such as less than 3.5 mm, e.g. less than 3 mm, such as less than 2.5 mm, e.g. less than 2 mm, such as between 1.5 and 5 mm, e.g. between 2 mm and 4 mm, such as between 2 mm and 3 mm.

9. The product carrier (1) according to any one of claims 1-8, wherein at least part of the bearing element (2) along the recess (4) is inclined.

10. The product carrier (1) according to claim 9, wherein said bearing element (2) along the recess (4) is inclined at least along said tendon trap (5).

11. A method of producing a product carrier (1) according to any one of claims 1-10, wherein said tendon trap (5) is produced when said product carrier (1) is produced e.g. by cast moulding or said tendon trap (5) is produced by removing part of said product carrier (1) along said recess (4) e.g. by grinding.

12. Use of the product carrier (1) according to any one of claims 1-10 for carrying the carcass of a slaughtered poultry or broiler.

## Patentansprüche

1. Produktträger (1) zum Tragen eines hängenden Geflügels, oder eines gespaltenen Teils eines Geflügels in beiden Beinen bzw. in einem Bein, wobei der Produktträger (1) umfasst:
ein flächig ausgebildetes Lagerelement (2) mit mindestens einer Absperreinrichtung (3); Und
mindestens eine Aussparung (4) zum Halten eines Geflügelbeins, und die Aussparung (4) umfasst mindestens eine Sehnenfalle (5), ***dadurch gekennzeichnet,* dass** die Aussparung (4) bei Betrachtung entlang einer Achse eher kreisförmig als oval ist im Wesentlichen der Achse des Geflügelkeulenknochens entsprechen, wenn er im Produktträger vorhanden ist; Und
wobei die Aussparung (4) ein Verhältnis zwischen dem größeren Durchmesser (16) der Ellipse und dem kleineren Durchmesser (17) der Ellipse aufweist, das kleiner als 1,5 ist, wenn der größere Durchmesser (16) der Ellipse entlang der Länge (20) der Aussparung gemessen wird (4) und der kleinere Durchmesser der Ellipse (17) wird entlang der Breite (21) der Aussparung (4) gemessen.

2. Produktträger (1) nach Anspruch 1, wobei das ebene Auflageelement (2) auf jeder Seite der Aussparung (4) und der Sehnenfalle einen kurzen Teil (8) und einen langen Teil (7) aufweist (5) ist ein Schlitz (6) im kurzen Teil (8) der Aussparung (4) und/oder im langen Teil (7) der Aussparung (4).

3. Der Produktträger (1) nach einem der Ansprüche 1-2, wobei der Schlitz (6) eine Tiefe, die als Sehnenfangtiefe (11) bezeichnet wird, von mindestens 2,5 mm, beispielsweise mindestens 3 mm, aufweist. z.B. mindestens 3,5 mm, wie mindestens 4 mm, z.B. mindestens 4,5 mm, wie mindestens 5 mm, z.B. mindestens 6 mm, wie mindestens 7 mm, z.B. mindestens 8 mm, wie mindestens 9 mm, z.B. mindestens 10 mm, gemessen von einer Linie, die die Kante des kurzen Teils (8) oder des langen Teils (7) entlang der Aussparung (4) erstreckt.

4. Produktträger (1) nach einem der Ansprüche 1-3, wobei die Sehnenfalle (5) eine Sehnenfalle (10) von mindestens 12 mm, beispielsweise mindestens 13 mm, z.B. mindestens 14 mm, wie mindestens 15 mm, z.B. mindestens 16 mm, wie mindestens 17 mm, z.B. mindestens 18 mm, z.B. mindestens 19 mm, wie mindestens 20 mm, z.B. mindestens 21 mm, wie mindestens 22 mm, z.B. mindestens 23 mm, wie mindestens 24 mm, z.B. mindestens 25 mm, wie mindestens 26 mm, z.B. mindestens 27 mm, wie mindestens 28 mm, z.B. mindestens 29 mm, wie mindestens 30 mm, z.B. mindestens 31 mm.

5. Produktträger (1) nach einem der Ansprüche 1-4, wobei die Sehnenfalle (5) einen Sehnenfangwinkel A (12) und/oder einen Sehnenfangwinkel B (13) aufweist und wobei die Sehnenfalle Winkel A (12) beträgt mindestens 17 Grad, beispielsweise mindestens 18 Grad, z.B. mindestens 19 Grad, wie zum Beispiel mindestens 20 Grad, mindestens 21 Grad, wie zum Beispiel mindestens 22 Grad, und/oder der Sehnenklemmwinkel B (13) beträgt mindestens 30 Grad, wie zum Beispiel mindestens 31 Grad, z.B. mindestens 32 Grad, beispielsweise mindestens 33 Grad, z.B. mindestens 34 Grad, beispielsweise mindestens 35 Grad, z.B. mindestens 34 Grad, beispielsweise mindestens 35 Grad, z.B. mindestens 36 Grad, beispielsweise mindestens 37 Grad, z.B. mindestens 38 Grad, beispielsweise mindestens 39 Grad, z.B. mindestens 40 Grad, beispielsweise mindestens 41 Grad.

6. Produktträger (1) nach einem der Ansprüche 1-5, wobei, wenn der Produktträger (1) für Broiler bestimmt ist und die Aussparung (4) eine Länge (20) von weniger als 30 mm aufweist, wie z weniger als 29 mm, z.B. weniger als 28 mm, wie zum Beispiel weniger als 27 mm, z.B. weniger als 26 mm, wie zum Beispiel weniger als 25 mm, z.B. weniger als 24 mm, wie zum Beispiel weniger als 23 mm, z.B. weniger als 22 mm, z. B. zwischen 18 mm und 23 mm, z. B. zwischen 20 mm und 22 mm, wie z.B. zwischen 23 mm und 28 mm, z.B. zwischen 25 mm und 31 mm.

7. Produktträger (1) nach einem der Ansprüche 1-6, wobei, wenn der Produktträger (1) für Broiler bestimmt ist und die Aussparung (4) eine Breite (21) von mindestens 16 mm aufweist, wie z mindestens 17 mm, z.B. mindestens 18 mm, wie mindestens 19 mm, z.B. mindestens 20 mm, wie mindestens 21 mm, z.B. mindestens 22 mm, wie mindestens 23 mm, z.B. mindestens 24 mm, wie mindestens 25 mm, z.B. mindestens 26 mm, beispielsweise zwischen 16,5 mm und 20 mm, z. B. zwischen 17 mm und 19 mm, beispielsweise zwischen 20 mm und 26 mm.

8. Produktträger (1) nach einem der Ansprüche 1-7, wobei in geschlossener Stellung des Produktträgers (1) der Abstand zwischen der Spitze (18) des Absperrorgans (3) und der lange Teil (7) des Lagerelements (2) weniger als 5 mm, beispielsweise weniger als 4,5 mm, z.B. weniger als 4 mm, beispielsweise weniger als 3,5 mm, z.B. weniger als 3 mm, beispielsweise weniger als 2,5 mm, z.B. weniger als 2 mm, beispielsweise zwischen 1,5 und 5 mm, z.B. zwischen 2 mm und 4 mm, beispielsweise zwischen 2 mm und 3 mm.

9. Produktträger (1) nach einem der Ansprüche 1-8, wobei zumindest ein Teil des Lagerelements (2) entlang der Aussparung (4) geneigt ist.

10. Produktträger (1) nach Anspruch 9, wobei das Auflageelement (2) entlang der Aussparung (4) zumindest entlang der Sehnenfalle (5) geneigt ist.

11. Verfahren zur Herstellung eines Produktträgers (1) nach einem der Ansprüche 1-10, wobei die Sehnenfalle (5) hergestellt wird, wenn der Produktträger (1) z. B. hergestellt wird. durch Gussformen oder die Sehnenfalle (5) wird durch Entfernen eines Teils des Produktträgers (1) entlang der Aussparung (4), z.B. durch Schleifen.

12. Verwendung des Produktträgers (1) nach einem der Ansprüche 1-10 zum Tragen des Schlachtkörpers eines geschlachteten Geflügels oder Masthähnchens.

## Revendications

1. Un transporteur de produit (1) pour transporter une volaille suspendue, ou une partie fendue d'une volaille, dans les deux pattes ou dans une patte, respectivement, lequel transporteur de produit (1) comprend:
un élément de palier de forme plane (2) avec au moins un dispositif d'obturation (3); et
au moins un évidement (4) pour maintenir une cuisse de volaille, et ledit évidement (4) comprend au moins un piège à tendon (5), ***caractérisé en* ce que** ledit évidement (4) est plus circulaire qu'ovale, lorsqu'il est observé le long d'un axe correspondant sensiblement à l'axe de l'os de pilon de volaille lorsqu'il est présent dans le support de produit; et
dans lequel ledit évidement (4) a une relation entre le diamètre de l'ellipse majeure (16) et le diamètre de l'ellipse mineure (17) qui est inférieure à 1,5, lorsque le diamètre de l'ellipse majeure (16) est mesuré sur la longueur (20) dudit évidement (4) et le diamètre mineur de l'ellipse (17) est mesuré le long de la largeur (21) dudit évidement (4).

2. Porte-produit (1) selon la revendication 1, dans lequel ledit élément d'appui de forme plane (2) comprend une partie courte (8) et une partie longue (7) de chaque côté dudit évidement (4), et ledit piège tendineux (5) est une fente (6) dans ladite partie courte (8) de l'évidement (4) et/ou dans ladite partie longue (7) de l'évidement (4).

3. Support de produit (1) selon l'une quelconque des revendications 1 à 2, dans lequel ladite fente (6) a une profondeur, notée profondeur de piège à tendon (11), d'au moins 2,5 mm, telle qu'au moins 3 mm, par exemple. au moins 3,5 mm, comme au moins 4 mm, par ex. au moins 4,5 mm, comme au moins 5 mm, par ex. au moins 6 mm, comme au moins 7 mm, par ex. au moins 8 mm, comme au moins 9 mm, par ex. au moins 10 mm, mesuré à partir d'une ligne prolongeant le bord de ladite partie courte (8) ou de ladite partie longue (7) le long dudit évidement (4).

4. Porte-produit (1) selon l'une quelconque des revendications 1 à 3, dans lequel ledit piège à tendon (5) a une longueur de piège à tendon (10) d'au moins 12 mm, telle qu'au moins 13 mm, par ex. au moins 14 mm, tel qu'au moins 15 mm, par ex. au moins 16 mm, tel qu'au moins 17 mm, par ex. au moins 18 mm, par ex. au moins 19 mm, tel qu'au moins 20 mm, par ex. au moins 21 mm, tel qu'au moins 22 mm, par ex. au moins 23 mm, comme au moins 24 mm, par ex. au moins 25 mm, tel qu'au moins 26 mm, par ex. au moins 27 mm, comme au moins 28 mm, par ex. au moins 29 mm, comme au moins 30 mm, par ex. au moins 31 millimètres.

5. Porte-produit (1) selon l'une quelconque des revendications 1 à 4, dans lequel ledit piège à tendon (5) a un angle de piège à tendon A (12) et/ou un angle de piège à tendon B (13) et dans lequel ledit piège à tendon l'angle A (12) est d'au moins 17 degrés, tel qu'au moins 18 degrés, par ex. au moins 19 degrés, tel qu'au moins 20 degrés, au moins 21 degrés, tel qu'au moins 22 degrés et/ou ledit angle de piège de tendon B (13) est d'au moins 30 degrés, tel qu'au moins 31 degrés, par ex. au moins 32 degrés, comme au moins 33 degrés, par ex. au moins 34 degrés, comme au moins 35 degrés, par ex. au moins 34 degrés, comme au moins 35 degrés, par ex. au moins 36 degrés, comme au moins 37 degrés, par ex. au moins 38 degrés, comme au moins 39 degrés, par ex. au moins 40 degrés, comme au moins 41 degrés.

6. Support de produit (1) selon l'une quelconque des revendications 1 à 5, dans lequel, lorsque ledit support de produit (1) est destiné à des poulets de chair, et ledit évidement (4) a une longueur (20) inférieure à 30 mm, telle que moins de 29 mm, par ex. moins de 28 mm, comme moins de 27 mm, par ex. moins de 26 mm, comme moins de 25 mm, par ex. moins de 24 mm, comme moins de 23 mm, par ex. moins de 22 mm, comme entre 18 mm et 23 mm, par ex. entre 20 mm et 22 mm, comme entre 23 mm et 28 mm, par ex. entre 25 mm et 31 mm.

7. Support de produit (1) selon l'une quelconque des revendications 1 à 6, dans lequel, lorsque ledit support de produit (1) est destiné à des poulets de chair, et ledit évidement (4) a une largeur (21) d'au moins 16 mm, telle que au moins 17 mm, par ex. au moins 18 mm, tel qu'au moins 19 mm, par ex. au moins 20 mm, tel qu'au moins 21 mm, par ex. au moins 22 mm, tel qu'au moins 23 mm, par ex. au moins 24 mm, tel qu'au moins 25 mm, par ex. au moins 26 mm, par exemple entre 16,5 mm et 20 mm, par ex. entre 17 mm et 19 mm, tel qu'entre 20 mm et 26 mm.

8. Porte-produit (1) selon l'une quelconque des revendications 1 à 7, dans lequel, lorsque ledit porte-produit (1) est dans une position fermée, la distance entre la pointe (18) du dispositif d'obturation (3) et la partie longue (7) de l'élément d'appui (2) est inférieure à 5 mm, telle que inférieure à 4,5 mm, par ex. moins de 4 mm, comme moins de 3,5 mm, par ex. moins de 3 mm, comme moins de 2,5 mm, par ex. inférieure à 2 mm, telle qu'entre 1,5 et 5 mm, par ex. entre 2 mm et 4 mm, de préférence entre 2 mm et 3 mm.

9. Porte-produit (1) selon l'une quelconque des revendications 1 à 8, dans lequel au moins une partie de l'élément d'appui (2) le long de l'évidement (4) est incliné.

10. Porte-produit (1) selon la revendication 9, dans lequel ledit élément d'appui (2) le long de l'évidement (4) est incliné au moins le long dudit piège tendineux (5).

11. Procédé de production d'un support de produit (1) selon l'une quelconque des revendications 1 à 10, dans lequel ledit piège à tendon (5) est produit lorsque ledit support de produit (1) est produit, par ex. par moulage par moulage ou ledit piège à tendon (5) est produit en retirant une partie dudit support de produit (1) le long dudit évidement (4), par ex. par meulage.

12. Utilisation du support de produit (1) selon l'une quelconque des revendications 1 à 10 pour transporter la carcasse d'une volaille abattue ou d'un poulet de chair.
